# EUROPÄISCHE PATENTSCHRIFT

(11) **EP 3 241 749 B1**
(45) Veröffentlichungstag und Bekanntmachung des Hinweises auf die Patenterteilung: **01.07.2020**
(21) Anmeldenummer: 17169470.6
(22) Anmeldetag: 04.05.2017
(51) Int. Cl.: B64D 11/04, E03F 1/00, F16K 31/126, E03C 1/23, F16K 37/00

(54) **SYSTEM UND VERFAHREN ZUR ENTSORGUNG VON FLUID AUS EINER KÜCHENSPÜLE**
SYSTEM AND METHOD FOR DISPOSING FLUID FROM A KITCHEN SINK
SYSTÈME ET PROCÉDÉ D'ÉLIMINATION DE FLUIDE À PARTIR D'UN ÉVIER

(30) Priorität: 04.05.2016 DE 102016108360
(43) Veröffentlichungstag der Anmeldung: 08.11.2017
(73) Patentinhaber: Airbus Operations GmbH, 21129 Hamburg (DE)
(72) Erfinder: Reiss, Matthias, 21129 Hamburg (DE); Kempa, Michael, 21129 Hamburg (DE); Lutzer, Wilhelm, 21129 Hamburg (DE); Spille, Marc, 20357 Hamburg (DE); Kiehne, Oliver, 21129 Hamburg (DE)
(74) Vertreter: LKGLOBAL Lorenz & Kopf PartG mbB Patentanwälte

(56) Entgegenhaltungen:
- WO-A1-02/14148
- WO-A1-2015/019335
- DE-A1-102011 012 047
- DE-U1-202011 108 281

## Beschreibung

### TECHNISCHES GEBIET

Die Erfindung betrifft ein System zum Entsorgen von Fluid aus einer Küchenspüle, ein Verfahren zum Steuern eines derartigen Systems sowie ein Fahrzeug mit einem derartigen System.

### HINTERGRUND DER ERFINDUNG

Bei herkömmlichen Flugzeugen kann Grauwasser, also Wässer aus Waschbecken und Bordküchen, über einen sogenannten "Drain Mast", bei dem es sich um einen beheizten Auslaufstutzen an der Unterseite des Flugzeugrumpfs handelt, über Bord gegeben werden, wenn sie dafür geeignet sind. Hingegen wird Schwarzwasser, bei dem es sich um die aus den Bordtoiletten des Flugzeugs anfallenden Abwässer handelt, im sogenannten "Waste Tank" oder Abwassersammeltank gesammelt und schließlich am Boden entsorgt. Damit das Schwarzwasser in den Abwassersammeltank gefördert wird, weist das Flugzeug eine Unterdruckquelle auf, die einen Unterdruck bei einer Bordtoilette erzeugt, um das anfallende Abwasser abzusaugen und dieses mittels des Unterdrucks in den Abwassersammeltank zu saugen. Bei dem Absaugen von anfallenden Abwässern in einer Bordtoilette kann es zu Geräuschemissionen kommen. Aufgrund dieser Geräuschemissionen wurde davon abgesehen, eine Unterdruckquelle zu verwenden, um Grauwasser in den Abwassersammeltank zu saugen, denn entsprechende Geräuschemissionen sind insbesondere in der Bordküche zu verhindern.

DE 10 2011 012047 A1 zeigt eine Abwasseranlage, ein Ventil und ein Verfahren zur Grauwasserdrainage für ein Verkehrsflugzeug mit Hilfe eines Selbstregelventils.

### ZUSAMMENFASSUNG DER ERFINDUNG

Der Erfindung liegt die Aufgabe zugrunde, ein System und ein Verfahren zur Entsorgung von Fluid aus einer Küchenspüle eines Flugzeugs bereitzustellen, welches die Entsorgung von in der Küchenspüle anfallenden Abwässer durch Absaugung mittels Unterdruck und Sammlung in einem Abwassersammeltank erlaubt.

Gemäß einem ersten Aspekt wird die Aufgabe gelöst durch ein System zur Entsorgung von Fluid aus einer Küchenspüle mit den Merkmalen des unabhängigen Anspruchs 1. Vorteilhafte Ausgestaltungen des Systems und bevorzugte Ausführungsformen sind in den zugehörigen Unteransprüchen und in der nachfolgenden Beschreibung wiedergegeben.

Es wird ein System zur Entsorgung von Fluid, insbesondere Abwässer, aus einer Küchenspüle eines Flugzeugs vorgeschlagen. Das System weist auf: eine Küchenspüle für ein Küchenkabinenmonument eines Fahrzeugs, ein Selbstregelventil, eine Steuereinheit, einen Sensor, und eine erste Signalverbindung zwischen dem Sensor und der Steuereinheit.

Ein Eingang des Selbstregelventils ist mit einer ersten Fluidleitung verbunden, die zumindest indirekt mit einer Ablauföffnung der Küchenspüle verbunden ist. Das Selbstregelventil ist unterhalb der Ablauföffnung der Küchenspüle angeordnet, so dass Fluid aus der Küchenspüle durch die zugehörige Ablauföffnung in die erste Fluidleitung fließen kann, wobei ein Ausgang des Selbstregelventils zumindest indirekt mit einer Unterdruckquelle koppelbar ausgebildet ist. Außerdem ist das Selbstregelventil dazu ausgebildet, bei einer vorbestimmten, ersten Menge von Fluid in der ersten Fluidleitung selbstständig zu öffnen, so dass das Selbstregelventil in einem Öffnungszustand ist und Fluid aus der ersten Fluidleitung durch das erste Selbstregelventil strömen kann, und bei einer vorbestimmten, zweiten Menge von Fluid in der ersten Fluidleitung selbstständig zu schließen, so dass das Selbstregelventil in einem Schließzustand ist und die vorbestimmte, zweite Menge von Fluid als eine Fluidrestmenge in der ersten Fluidleitung verbleibt. Der Sensor ist zur Erfassung des Öffnungszustands oder des Schließzustands des Selbstregelventils ausgebildet ist. Außerdem ist der Sensor zur Übertragung eines Sensorsignals, das den erfassten Zustand des Selbstregelventils repräsentiert, an die Steuereinheit ausgebildet, wobei die Steuereinheit, basierend auf dem übertragenen Sensorsignal, zur Ausgabe mindestens eines Steuersignals ausgebildet ist, wobei das Selbstregelventil ferner ein Rückschlagventil aufweist, das einen durch eine Schwimmerkugel verschließbaren Dichtsitz besitzt und dazu eingerichtet ist, einen Rückfluss eines Fluids von dem Ausgang zu dem Eingang des Selbstregelventils zu verhindern, wobei das Rückschlagventil direkt stromaufwärts des Ausgangs angebracht ist.

Ein Küchenkabinenmonument eines Flugzeugs kann auch als Bordküche oder als "Galley" bezeichnet werden. Für ein entsprechendes Küchenkabinenmonument ist eine Küchenspüle vorgesehen. Die Küchenspüle kann nach Art eines Spülbeckens ausgebildet sein, um in diese Abwässer, wie beispielsweise Reste aus einer Getränkeflasche, wie beispielsweise O-Saft, abgeben zu können. Die Abwässer können also eine Mischung aus einer Flüssigkeit und einem Feststoff sein.

An einer Unterseite der Küchenspüle ist eine Ablauföffnung vorgesehen, durch die ein in die Küchenspüle gegebenes Fluid selbsttätig ablaufen kann. Die Ablauföffnung der Küchenspüle ist zumindest indirekt mit einer ersten Fluidleitung verbunden, die zu einem Eingang des Selbstregelventils führt. Vorzugsweise erstreckt sich die erste Fluidleitung von der Ablauföffnung der Küchenspüle bis zu dem Eingang des Selbstregelventils. Das Selbstregelventil ist unterhalb der Ablauföffnung der Küchenspüle angeordnet, so dass ein in die Küchenspüle gegebenes Fluid, insbesondere Abwasser, selbsttätig durch die Ablauföffnung und die erste Fluidleitung bis zu dem Eingang des Selbstregelventils fließen kann.

Das Selbstregelventil ist ein Ventil, das dazu ausgebildet ist, selbstständig zwischen einem Öffnungszustand und einem Schließzustand zu schalten. Dazu ist das Selbstregelventil derart ausgebildet, dass es bei einer vorbestimmten Menge von Fluid in der ersten Fluidleitung selbstständig öffnet, so dass das Selbstregelventil in einem Öffnungszustand ist und Fluid aus der ersten Fluidleitung durch das erste Selbstregelventil zu einem Ausgang des Selbstregelventils strömen kann. Außerdem ist das Selbstregelventil derart ausgebildet, dass es bei einer vorbestimmten zweiten Menge von Fluid in der ersten Fluidleitung selbstständig schließt, so dass das Selbstregelventil in einem Schließzustand ist und die vorbestimmte, zweite Menge von Fluid als eine Fluidrestmenge in der ersten Fluidleitung verbleibt.

Außerdem ist es vorgesehen, dass der Ausgang des Selbstregelventils zumindest indirekt mit einer Unterdruckquelle koppelbar ausgebildet ist. Öffnet nun das Selbstregelventil, wenn zumindest die vorbestimmte, erste Menge von Fluid in der ersten Fluidleitung ist, so kann Fluid durch das erste Selbstregelventil aus der ersten Fluidleitung abgesaugt werden.

Das Fluid aus der ersten Fluidleitung wird jedoch nicht vollständig abgesaugt. Vielmehr verbleibt die Fluidrestmenge in der ersten Fluidleitung, wenn die vorbestimmte, zweite Menge von Fluid in der ersten Fluidleitung erreicht ist, so dass das Selbstregelventil in den Schließzustand wechselt. Die vorbestimmte, zweite Menge an Fluid ist also kleiner als die vorbestimmte, erste Menge an Fluid. Damit wird effektiv verhindert, dass Luft durch das erste Selbstregelventil gesaugt werden kann, denn das Selbstregelventil ist derart ausgebildet, dass immer Fluid in der ersten Fluidleitung oberhalb des ersten Selbstregelventils verbleibt. Damit werden entsprechende Geräuschemissionen an der Ablauföffnung der Küchenspüle effektiv verhindert.

Mit dem zuvor genannten System ist es deshalb möglich, dass Abwässer aus einer Küchenspüle mittels Unterdruck zumindest indirekt abgesaugt werden können und sodann in einem Abwassersammeltank gesammelt werden können. Somit kann darauf verzichtet werden, dass Abwässer aus der Küchenspüle zu dem sogenannten "Drain Mast" geleitet werden und daraufhin an der Unterseite des Rumpfs abgegeben werden. Daraus folgt auch, dass die Außenseite des Flugzeugrumpfs nicht durch die Abwässer aus der Küchenspüle verunreinigt werden. Denn diese können nunmehr in dem Abwassertank gesammelt werden und, wenn das Flugzeug am Boden ist, entsorgt werden, ohne dabei die Außenseite des Flugzeugrumpfs zu verschmutzen.

Außerdem ist es vorgesehen, dass das System einen Sensor aufweist. Der Sensor ist zur Erfassung eines Zustands des Selbstregelventils, also insbesondere des Öffnungszustands oder des Schließzustands des Selbstregelventils, ausgebildet. Außerdem ist der Sensor dazu ausgebildet, ein Sensorsignal an eine Steuereinheit zu übertragen, wobei das Sensorsignal den erfassten Zustand des Selbstregelventils repräsentiert. Basierend auf dem übertragenden Sensorsignal ist die Steuereinheit zur Ausgabe mindestens eines Steuersignals ausgebildet. Dieses Steuersignal bietet die Möglichkeit, dass Folgeaktionen ausgelöst werden. So kann beispielsweise mittels des Steuersignals ein Unterdruck an den Ausgang des Selbstregelventils angelegt werden und/oder unterbrochen werden. Dies verhindert, dass das Selbstregelventil kontinuierlich einem Unterdruck ausgesetzt ist.

Eine vorteilhafte Ausgestaltung des Systems zeichnet sich dadurch aus, dass das System ein erstes, steuerbares Ventil aufweist, dessen Ausgang zumindest indirekt mit einer Unterdruckquelle zum Absaugen von Fluid koppelbar ausgebildet ist. Außerdem ist eine Fluidverbindung zwischen dem Ausgang des Selbstregelventils und einem Eingang des ersten, steuerbaren Ventils vorgesehen. Darüber hinaus weist das System eine zweite Signalverbindung zwischen der Steuereinheit und dem ersten, steuerbaren Ventil auf, wobei die Steuereinheit mittels einer Übertragung eines Steuersignals an das erste, steuerbare Ventil dazu ausgebildet ist, das erste, steuerbare Ventil zu schließen, wenn und/oder sobald das Selbstregelventil in dem Schließzustand ist. Das erste, steuerbare Ventil kann also zwischen der Unterdruckquelle und dem Selbstregelventil angeordnet sein, wobei entsprechende Fluidleitungen zwischen dem ersten, steuerbaren Ventil und dem Selbstregelventil bzw. dem steuerbaren Ventil und der Unterdruckquelle vorgesehen sein können. Das erste, steuerbare Ventil kann somit dazu dienen, einen von der Unterdruckquelle bereitgestellten Unterdruck an den Ausgang des Selbstregelventils anzulegen oder nicht.

Durch das Sensorsignal, das den erfassten Zustand des Selbstregelventils repräsentiert, wird der Steuereinheit die Information über den Zustand des Selbstregelventils übertragen. Die Steuereinheit kann nunmehr also in Abhängigkeit des Zustands des Selbstregelventils das steuerbare Ventil steuern. Da das steuerbare Ventil steuerbar ist, kann die Steuereinheit durch eine Übertragung eines entsprechenden Steuersignals das steuerbare Ventil derart steuern, dass es geschlossen ist, wenn das Selbstregelventil in dem Schließzustand ist. Das Schließen des ersten, steuerbaren Ventils kann dabei erfolgen, sobald das Sensorsignal (mit der entsprechenden Information) bei der Steuereinheit eingegangen ist. Alternativ kann die Ansteuerung des ersten, steuerbaren Ventils auch verzögert und/oder von weiteren Parameter und/oder Signalen abhängen, die an die Steuereinheit übertragbar sind. So kann die Steuereinheit beispielsweise, basierend auf dem übertragenen Sensorsignal, zur Übertragung eines Steuersignals an das erste, steuerbare Ventil ausgebildet sein, um das erste, steuerbare Ventil zu schließen. Schließt das Selbstregelventil also selbstständig, um eine Fluidrestmenge in der ersten Fluidleitung vorzuhalten, kann die Steuereinheit dazu ausgebildet sein, das steuerbare Ventil ebenfalls zu schließen, um einen Unterdruck von dem Ausgang des Selbstregelventils zu nehmen. Dies bietet den Vorteil, dass die mechanische Belastung, insbesondere durch ein entsprechendes Anlegen von einem Unterdruck an dem Ausgang des Selbstregelventils, verringert wird, was die Haltbarkeit und/oder Langlebigkeit des Selbstregelventils verlängern kann. Durch das Schließen des ersten, steuerbaren Ventils wird außerdem sichergestellt, dass eine Fluidverbindung zwischen dem Selbstregelventil und dem Abwassersammeltank nur dann hergestellt wird, wenn tatsächlich Flüssigkeit aus der ersten Fluidleitung zu dem Abwassertank strömen soll. Ansonsten ist die entsprechende Fluidverbindung durch das erste, steuerbare Ventil gesperrt. Damit wird ein ungewünschter Rückstrom von Fluid aus dem Abwassersammeltank in Richtung des ersten Selbstregelventils, oder sogar in Richtung der Küchenspüle, effektiv verhindert.

Eine vorteilhafte Ausgestaltung des Systems zeichnet sich dadurch aus, dass die Steuereinheit mittels einer Übertragung eines, insbesondere weiteren, Steuersignals an das erste, steuerbare Ventil dazu ausgebildet ist, das erste, steuerbare Ventil zu öffnen, wenn und/oder sobald das Selbstregelventil in dem Öffnungszustand ist. Die Information über den Zustandswechsel in den Öffnungszustand kann von dem Sensor durch Übertragung des Sensorsignals an die Steuereinheit übermittelt werden. Liegt diese Information bei der Steuereinheit vor, kann die Steuereinheit das erste, steuerbare Ventil durch die Übertragung eines entsprechenden Steuersignals an das erste, steuerbare Ventil öffnen, so dass ein von der Unterdruckquelle bereitgestellter Unterdruck an dem Ausgang des Selbstregelventils anliegt. Dies verursacht ein Absaugen von Fluid aus der ersten Fluidleitung. Das Öffnen des ersten, steuerbaren Ventils kann dabei erfolgen, sobald das Sensorsignal (mit der entsprechenden Information) bei der Steuereinheit eingegangen ist. Alternativ kann die Ansteuerung des ersten, steuerbaren Ventils auch verzögert und/oder von weiteren Parameter und/oder Signalen abhängen, die an die Steuereinheit übertragbar sind. So kann die Steuereinheit beispielsweise, basierend auf dem übertragenen Sensorsignal, zur Übertragung eines Steuersignals an das erste, steuerbare Ventil ausgebildet sein, um das erste, steuerbare Ventil zu öffnen. Bevorzugt erfolgt das Absaugen des Fluids aus der ersten Fluidleitung allerdings nur so lange, bis das Selbstregelventil in den Schließzustand wechselt. Die Information über einen entsprechenden Zustandsübergang kann von dem Sensor mittels des Sensorsignals an die Steuereinheit übertragen werden. Daraufhin kann die Steuereinheit, wie zu der vorangegangenen Ausgestaltung erläutert, dazu ausgebildet sein, das erste, steuerbare Ventil zu schließen.

Durch die Erfassung des Zustands des Selbstregelventils und die Übertragung eines entsprechenden Steuersignals, das den Zustand des Selbstregelventils repräsentiert, an die Steuereinheit, ist diese bevorzugt dazu in der Lage, das erste, steuerbare Ventil analog zu dem Schließzustand des Selbstregelventils zu steuern, also zu öffnen oder zu schließen. Damit wird auf besonders effektive Weise sichergestellt, dass ein Unterdruck an dem Ausgang des Selbstregelventils immer nur dann anliegt, wenn dieser auch tatsächlich notwendig ist. Dies verhindert außerdem sehr effektiv mögliche Geräuschemissionen. Darüber hinaus wird ein Rückstrom von Fluid aus einem Abwassersammeltank verhindert.

Eine weitere vorteilhafte Ausgestaltung des Systems zeichnet sich dadurch aus, dass eine Wasserzufuhrarmatur zum Zuführen von Wasser in die Küchenspüle vorgesehen ist. Außerdem weist das System für diese Ausgestaltung ein zweites, steuerbares Ventil auf, das zum Steuern eines Wasserstroms zu der Wasserzufuhrarmatur ausgebildet ist. Darüber hinaus ist eine dritte Signalverbindung zwischen der Steuereinheit und dem zweiten, steuerbaren Ventil vorgesehen, wobei die Steuereinheit mittels einer Übertragung eines, insbesondere weiteren, Steuersignals an das zweite, steuerbare Ventil dazu ausgebildet ist, das zweite steuerbare Ventil zu öffnen, wenn und/oder sobald das Selbstregelventil in dem Öffnungszustand ist.

Die zuletzt genannte Ausgestaltung des Systems kann mit einer der beiden zuvor genannten, bevorzugten Ausgestaltungen des Systems kombiniert sein oder eine unabhängige, vorteilhafte Ausgestaltung des Systems gemäß dem ersten Aspekt der Erfindung bilden. Für das zweite steuerbare Ventil ist deshalb das erste, steuerbare Ventil nicht notwendigerweise eine Voraussetzung.

Die Wasserzufuhrarmatur kann beispielsweise nach Art eines Wasserhahns ausgebildet sein, um durch diese Wasser ausströmen zu lassen, das sodann in die Küchenspüle strömt. Das zweite, steuerbare Ventil ist zum Steuern eines Wasserstroms zu der Wasserzufuhrarmatur ausgebildet. Dazu kann das zweite, steuerbare Ventil zumindest indirekt mit einer Wasserdruckquelle und/oder einem Wasserleitungsversorgungssystem zumindest indirekt gekoppelt sein. Öffnet das zweite steuerbare Ventil, so kann Wasser von der Wasserdruckquelle bzw. von dem Wasserleitungsversorgungssystem durch das zweite, steuerbare Ventil zu der Wasserzufuhrarmatur strömen, so dass Wasser aus dieser in die Küchenspüle strömen kann. Parallel zu dem zweiten, steuerbaren Ventil kann ein manuell betätigbares Ventil vorgesehen sein, um bei Bedarf manuell Wasser in die Küchenspüle strömen zu lassen.

Wie zuvor bereits erläutert, dient der Sensor des Systems zur Übertragung eines Sensorsignals, das den erfassten Zustand des Selbstregelventils repräsentiert. Ist das Selbstregelventil, korrespondierend zu der Information des Sensorsignals, in dem Öffnungszustand, so kann die Steuereinheit, basierend auf dieser erhaltenen Information das zweite, steuerbare Ventil, durch Übertragung eines entsprechenden Steuersignals an das zweite, steuerbare Ventil dazu ausgebildet sein, das zweite, steuerbare Ventil entsprechend zu steuern, also zu öffnen oder zu schließen. Dabei ist es vorgesehen, dass die Steuereinheit das zweite, steuerbare Ventil derart durch Übertragung des entsprechenden Steuersignals steuert, dass das zweite, steuerbare Ventil öffnet, wenn und/oder sobald das Selbstregelventil im Öffnungszustand ist. Das Öffnen des zweiten, steuerbaren Ventils kann dabei erfolgen, sobald das Sensorsignal (mit der entsprechenden Information) bei der Steuereinheit eingegangen ist. Alternativ kann die Ansteuerung des zweiten, steuerbaren Ventils auch verzögert und/oder von weiteren Parameter und/oder Signalen abhängen, die an die Steuereinheit übertragbar sind. So kann die Steuereinheit beispielsweise, basierend auf dem übertragenen Sensorsignal, zur Übertragung eines Steuersignals an das zweite, steuerbare Ventil ausgebildet sein, um das zweite, steuerbare Ventil zu öffnen. Das Öffnen des zweiten, steuerbaren Ventils bietet den Vorteil, dass das durch die Wasserarmatur in die Küchenspüle strömende Wasser zu einer Spülung der Küchenspüle führt, so dass diese gereinigt wird, wenn das Selbstregelventil in dem Öffnungszustand ist. Dabei strömt das durch die Wasserzufuhrarmatur in die Küchenspüle strömende Wasser anschließend durch die Ablauföffnung der Küchenspüle in die erste Fluidleitung. Sollte es nun aufgrund des Absaugens des Fluids aus der ersten Fluidleitung zu Geräuschemissionen kommen, könnten diese durch das gleichzeitig einströmende Wasser von der Küchenspüle in die erste Fluidleitung gedämpft werden. Es kann auch vorgesehen sein, das zweite Ventil erst dann zu öffnen, wenn das Selbstregelventil nach dem Durchlassen abzuführender Flüssigkeit wieder geschlossen ist, da es sonst zur Vermischung von Frischwasser und Abwasser (Getränkeresten) kommen könnte und damit die Spülwirkung im ungünstigsten Fall beeinträchtigt werden könnte.

Eine vorteilhafte Ausgestaltung des Systems zeichnet sich dadurch aus, dass die Steuereinheit mittels einer Übertragung eines, insbesondere weiteren, Steuersignals an das zweite, steuerbare Ventil dazu ausgebildet ist, das zweite, steuerbare Ventil zu schließen, wenn und/oder sobald das Selbstregelventil in dem Schließzustand ist. Das Selbstregelventil wechselt selbstständig in den Schließzustand, wenn eine vorbestimmte, zweite Menge von Fluid in der ersten Fluidleitung ist. Diese dient sodann dazu, eine Fluidrestmenge in der ersten Fluidleitung zu bilden. Um zu verhindern, dass die Fluidrestmenge in der ersten Fluidleitung deutlich vergrößert wird, kann die Steuereinheit dazu ausgebildet sein, durch Übertragung eines entsprechenden Steuersignals das zweite steuerbare Ventil zu schließen. Somit wird effektiv verhindert, dass weiteres Wasser durch die Wasserzufuhrarmatur in die Küchenspüle strömt, was zu einer Vergrößerung der Fluidrestmenge führen kann. Dies wird jedoch durch die Übertragung eines entsprechenden Steuersignals an das zweite, steuerbare Ventil auf ein Minimum gehalten. Das Schließen des zweiten, steuerbaren Ventils kann dabei erfolgen, sobald das Sensorsignal (mit der entsprechenden Information) bei der Steuereinheit eingegangen ist. Alternativ kann die Ansteuerung des zweiten, steuerbaren Ventils auch verzögert und/oder von weiteren Parameter und/oder Signalen abhängen, die an die Steuereinheit übertragbar sind. So kann die Steuereinheit beispielsweise, basierend auf dem übertragenen Sensorsignal, zur Übertragung eines Steuersignals an das zweite, steuerbare Ventil ausgebildet sein, um das zweite, steuerbare Ventil zu schließen.

Eine weitere vorteilhafte Ausgestaltung des Systems zeichnet sich dadurch aus, dass die Steuereinheit mittels einer Übertragung eines, insbesondere weiteren, Steuersignals an das zweite steuerbare Ventil dazu ausgebildet ist, das zweite, steuerbare Ventil nach einem Ablauf einer Verzögerungszeit im Anschluss an den erfassten Schließzustand des Selbstregelventils zu schließen. Dies bietet den Vorteil, dass das zweite, steuerbare Ventil nicht unmittelbar nach dem Zustandsübergang des Selbstregelventils von dem Öffnungszustand in den Schließzustand geschlossen wird. Vielmehr erfolgt die Schließung des zweiten, steuerbaren Ventils im Anschluss an den Ablauf einer Verzögerungszeit nach dem Zustandswechsel des Selbstregelventils. Die Verzögerungszeit kann dazu vorbestimmt sein. Mit der Vorbestimmung der Verzögerungszeit kann eine vorbestimmte Menge von Wasser vorbestimmt sein, die im Anschluss an den Zustandswechsel des Selbstregelventils noch in die Küchenspüle strömt, so dass gewährleistet sein kann, dass die Fluidrestmenge in der ersten Fluidleitung einen Mindestanteil von Wasser, insbesondere Frischwasser aus der Wasserzufuhrarmatur, aufweist. Dies verhindert effektiv, dass es zu Ablagerungen in der ersten Fluidleitung kommt, so dass Verstopfungen in der ersten Fluidleitung effektiv verhindern werden können.

Eine weitere vorteilhafte Ausgestaltung des Systems zeichnet sich dadurch aus, dass das System eine Eingabeeinheit, insbesondere mit einem Taster, aufweist. Außerdem ist eine Signalverbindung zwischen der Eingabeeinheit und der Steuereinheit vorgesehen, wobei die Steuereinheit mittels der Eingabeeinheit derart steuerbar ist, um das erste, steuerbare Ventil zu öffnen oder zu schließen und/oder um das zweite, steuerbare Ventil zu öffnen oder zu schließen.

Die Eingabeeinheit, insbesondere der Taster, kann dem Küchenkabinenmonument des Flugzeugs zugeordnet sein. Durch die Betätigung der Eingabeeinheit bzw. des Tasters kann ein Steuersignal generiert werden, das mittels der entsprechenden Signalverbindung zu der Steuereinheit übertragen wird. Basierend auf diesem Steuersignal kann die Steuereinheit das erste und/oder das zweite, steuerbare Ventil steuern. Außerdem kann dem Selbstregelventil eine steuerbare Stelleinheit zugeordnet sein, die zum Öffnen des Selbstregelventils ausgebildet ist. Mittels der Stelleinheit kann das Selbstregelventil also unabhängig von der Fluidmenge in der ersten Fluidleitung geöffnet werden. Weiterhin ist es bevorzugt vorgesehen, dass die Steuereinheit mittels einer Signalverbindung mit der Stelleinheit verbunden ist, um Steuersignale an die Stelleinheit zu übertragen, so dass sich das Selbstregelventil gesteuert von der Steuereinheit öffnen lässt. Dafür kann die Steuereinheit derart ausgebildet sein, dass die Steuereinheit die Stelleinheit basierend auf dem Steuersignal der Eingabeeinheit steuert. Mit anderen Worten ist die Steuereinheit mittels der Eingabeeinheit vorzugsweise derart steuerbar, um das Selbstregelventil mittels der zugeordneten Stelleinheit zu öffnen. Somit kann die Eingabeeinheit dazu verwendet werden, um ein manuelles Absaugen von Fluid aus der ersten Fluidleitung erfolgen zu lassen. Diese Ausgestaltung bietet den Vorteil, dass, wenn das Flugzeug beispielsweise am Boden ist, die Fluidrestmenge aus der ersten Fluidleitung abgesaugt werden kann, um zu verhindern, dass es zu Ablagerungen und/oder einer Verstopfung in der ersten Fluidleitung kommt.

Eine weitere vorteilhafte Ausgestaltung des Systems zeichnet sich dadurch aus, dass die Steuereinheit zum Empfang eines Instruktionssignals von einer übergeordneten Kontrolleinheit ausgebildet ist, wobei die Steuereinheit basierend auf dem Instruktionssignal derart steuerbar ist, um das erste, steuerbare Ventil zu öffnen oder zu schließen und/oder um das zweite, steuerbare Ventil zu öffnen oder zu schließen. Bevorzugt ist die Steuereinheit dazu ausgebildet, basierend auf dem Instruktionssignal ein Steuersignal an das erste, steuerbare Ventil zu senden, um dieses zu öffnen oder zu schließen. Weiterhin kann die Steuereinheit dazu ausgebildet sein, basierend auf dem Instruktionssignal ein, insbesondere weiteres, Steuersignal an das zweite Ventil zu übertragen, um dieses zu öffnen oder zu schließen. Indem die übergeordnete Kontrolleinheit ein Instruktionssignal an die Steuereinheit senden kann, was von der Steuereinheit ausgewertet werden kann, ist es möglich, das erste und/oder zweite Ventil zu öffnen bzw. zu schließen. Auf die vorangegangenen Erläuterungen zu der bevorzugten Stelleinheit des Selbstregelventils wird in analoger Weise Bezug genommen. Somit kann die Steuereinheit derart ausgebildet sein, dass die Steuereinheit die Stelleinheit basierend auf dem Instruktionssignal steuert. Mit anderen Worten ist die Steuereinheit vorzugsweise derart ausgebildet sein, um das Selbstregelventil mittels der zugeordneten Stelleinheit basierend auf dem Instruktionssignal zu öffnen. Dies ist dann von Vorteil, wenn das Flugzeug beispielsweise am Boden ist, und sichergestellt werden soll, dass kein Restfluid in der ersten Fluidleitung verbleibt. In diesem Fall kann beispielsweise mittels des Instruktionssignals eine Öffnung des ersten Ventils hervorgerufen werden, so dass eine entsprechende Fluidrestmenge aus der ersten Fluidleitung abgesaugt wird.

Erfindungsgemäß weist das Selbstregelventil direkt stromaufwärts des Ausgangs ein Rückschlagventil auf, das einen durch eine Schwimmerkugel verschließbaren Dichtsitz besitzt und dazu eingerichtet ist, einen Rückfluss eines Fluids von dem Ausgang zu dem Eingang des Selbstregelventils zu verhindern. Das Rückschlagventil kann ein eigenständiges Rückschlagventil sein oder einen entsprechend ausgestalteten Abschnitt des Selbstregelventils bilden. Die Integration eines solchen Rückschlagventils kann eine weiter verbesserte Dichtwirkung des Selbstregelventils in bestimmten Betriebszuständen hervorrufen. Insbesondere können Schwingungsphänomene an einer das Selbstregelventil schließenden Komponente zum Abführen eines Fluids eliminiert werden, um beispielsweise die dabei entstehenden Geräusche zu unterdrücken.

In einer weiter vorteilhaften Ausführungsform weist das Rückschlagventil eine selektiv lösbare Spanneinrichtung auf, die eine zusätzliche Haltekraft auf die Schwimmerkugel in Richtung des Dichtsitzes ausübt. Die Spanneinrichtung ist bevorzugt derart dimensioniert, dass die zusätzlich aufgebrachte Haltekraft die Schwimmerkugel gerade so fest an den Dichtsitz drückt, dass ein Abfließen von Fluid durch das Rückschlagventil bei einer Mindestdruckdifferenz zwischen dem Eingang und dem Ausgang des Selbstregelventils ermöglicht ist. Durch das Andrücken der Schwimmerkugel an ihren Dichtsitz können jegliche Rückströmungen durch den Ausgang des Selbstregelventils in Richtung des Eingangs vermieden werden. Liegt jedoch ein ausreichender Differenzdruck zwischen den beiden Seiten des Selbstregelventils vor und ist eine bestimmte Fluidmenge im Eingang vorhanden, so dass der Öffnungszustand erreicht wird, kann die Haltekraft der Schwimmerkugel jedoch überwunden werden. Die Mindestdruckdifferenz kann etwa im Bereich von 0,05 bar liegen. Die Spanneinrichtung kann zudem selektiv gelöst werden, um die Haltekraft im Wesentlichen zu eliminieren. Dies ist sinnvoll, um beim Bodenaufenthalt oder dergleichen eine Drainage des Ventils durchzuführen. Fluid, das sich in dem Selbstregelventil befindet, wird dann ohne Weiteres aus dem Auslass hinausbefördert. Dies kann vor dem Abstellen des Flugzeugs am Boden sinnvoll sein, wenn mit Vereisung von derartigen Restflüssigkeiten gerechnet werden muss. Zum Ablassen der Flüssigkeit, die sich in dem Eingang des Selbstregelventils befindet, ist das Anheben eines aufschwimmenden Kolbens in eine Öffnungsposition nützlich.

Die Spannvorrichtung kann auf unterschiedliche Weisen realisiert werden. Diese können zum Beispiel magnetische, elektromagnetische, pneumatisch oder elektrisch betriebene Vorrichtungen beinhalten, die dazu geeignet sind, eine Haltekraft auf die Schwimmerkugel auszuüben und bei Bedarf wieder zu lösen.

Gemäß einem zweiten Aspekt wird die eingangs genannte Aufgabe durch ein Flugzeug gelöst, das ein System aufweist, wie es zuvor erläutert wurde. Dabei kann das System gemäß dem ersten Aspekt und/oder mindestens einer der dazu erläuterten, vorteilhaften Ausgestaltungen ausgebildet sein. In diesem Zusammenhang wird auf die vorangegangenen Erläuterungen, bevorzugten Ausgestaltungen, bevorzugten Merkmale, Effekte und/oder Vorteile in analoger Weise Bezug genommen.

Gemäß einem dritten Aspekt der Erfindung wird die eingangs genannte Aufgabe durch ein Verfahren gelöst. Das Verfahren dient zum Steuern eines Systems, wie es zuvor erläutert wurde. Sofern das System von dem Fahrzeug umfasst ist, kann das Verfahren auch zum Steuern des Systems des Fahrzeugs dienen. Das Verfahren umfasst die Schritte: Erfassen des Zustands des Selbstregelventils, und Übertragen des Steuersignals von dem Sensor an die Steuereinheit, wobei das Sensorsignal den erfassten Zustand des Selbstregelventils repräsentiert. Dies bietet den Vorteil, dass die Steuereinheit in Abhängigkeit des Sensorsignals, und somit in Abhängigkeit des Zustands des Selbstregelventils, eine Folgeaktion einleiten kann. Eine derartige Folgeaktion kann beispielsweise die Generierung eines Steuersignals für das erste und/oder zweite, steuerbare Ventil sein.

Eine vorteilhafte Ausgestaltung des Verfahrens zeichnet sich durch den Schritt aus: Schließen des ersten, steuerbaren Ventils durch Übertragen eines Steuersignals von der Steuereinheit an das erste, steuerbare Ventil, wenn und/oder sobald das Selbstregelventil in dem Schließzustand ist. Somit kann das Verfahren dazu ausgebildet sein, das erste Ventil zu schließen, wenn das erste Selbstregelventil selbstständig schließt. Auf die vorangegangenen Erläuterungen, bevorzugten Ausgestaltungen, Effekte und/oder Vorteile im Zusammenhang mit dem Schließen des ersten, steuerbaren Ventils wird in analoger Weise Bezug genommen.

Eine vorteilhafte Ausgestaltung des Verfahrens zeichnet sich durch den Schritt aus: Öffnen des ersten, steuerbaren Ventils durch Übertragen eines Steuersignals von der Steuereinheit an das erste, steuerbare Ventil, wenn und/oder sobald das Selbstregelventil in dem Öffnungszustand ist. Somit kann das erste, steuerbare Ventil analog zu dem Selbstregelventil geöffnet werden. Auf die vorangegangenen Erläuterungen, bevorzugten Ausgestaltungen, Effekte und/oder Vorteile im Zusammenhang mit dem Öffnen des ersten, steuerbaren Ventils wird in analoger Weise Bezug genommen.

Eine vorteilhafte Ausgestaltung des Verfahrens zeichnet sich durch den folgenden Schritt aus: Öffnen des zweiten, steuerbaren Ventils durch Übertragen eines, insbesondere weiteren, Steuersignals von der Steuereinheit an das zweite, steuerbare Ventil, wenn und/oder sobald das Selbstregelventil in dem Öffnungszustand ist. Somit kann das Verfahren dazu ausgestaltet sein, das zweite, steuerbare Ventil in analoger Weise zu dem Zustandsübergang des Selbstregelventils zu öffnen, so dass Wasser durch die Wasserarmatur in die Küchenspüle strömen kann. Auf die vorangegangenen Erläuterungen, bevorzugten Ausgestaltungen, bevorzugten Merkmale, Effekte und/oder Vorteile im Zusammenhang mit dem Öffnen des zweiten, steuerbaren Ventils wird in analoger Weise Bezug genommen.

Eine weitere vorteilhafte Ausgestaltung des Verfahrens zeichnet sich durch den folgenden Schritt aus: Schließen des zweiten, steuerbaren Ventils durch Übertragen eines, insbesondere weiteren, Steuersignals von der Steuereinheit an das zweite, steuerbare Ventil, wenn und/oder sobald das Selbstregelventil in dem Schließzustand ist. Somit kann das Verfahren dazu ausgestaltet sein, das zweite, steuerbare Ventil mittels der Steuereinheit in analoger Weise zu dem Zustandsübergang des Selbstregelventils zu schließen, wenn dieses in den Schließzustand wechselt. Auf die vorangegangenen Erläuterungen, bevorzugten Ausgestaltungen, bevorzugten Merkmale, Effekte und/oder Vorteile im Zusammenhang mit dem Schließen des zweiten, steuerbaren Ventils wird in analoger Weise Bezug genommen.

Eine weitere vorteilhafte Ausgestaltung des Verfahrens zeichnet sich durch den folgenden Schritt aus: Schließen des zweiten, steuerbaren Ventils nach Ablauf einer Verzögerungszeit im Anschluss an den erfassten Schließzustand des Selbstregelventils, und zwar durch Übertragen eines, insbesondere weiteren, Steuersignals von der Steuereinheit an das zweite, steuerbare Ventil. Dies bietet den Vorteil, dass noch eine Menge an Wasser durch die Wasserarmatur in die Küchenspüle strömen kann, bevor das zweite Ventil schließt. Auf die vorangegangenen Erläuterungen, bevorzugten Ausgestaltungen, bevorzugten Merkmale, Effekte und/oder Vorteile im Zusammenhang mit dem verzögerten Schließen des zweiten, steuerbaren Ventils wird in analoger Weise Bezug genommen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Fig. 1: zeigt einen schematischen Aufbau des Systems.
- Fig. 2: zeigt eine beispielhafte Ausgestaltung eines nicht erfindungsgemäßen Selbstregelventils in einer schematischen Querschnittsansicht.
- Fig. 3: zeigt eine weitere beispielhafte Ausgestaltung eines nicht erfindungsgemäßen Selbstregelventils in einer schematischen Querschnittsansicht.
- Fig. 4: zeigt eine beispielhafte Ausgestaltung eines erfindungsgemässen Selbstregelventils in einer schematischen Querschnittsansicht.
- Fig. 5: zeigt eine weitere beispielhafte Ausgestaltung eines erfindungsgemäßen Selbstregelventils in einer schematischen Querschnittsansicht.

### DETAILLIERTE DARSTELLUNG EXEMPLARISCHER AUSFÜHRUNGSFORMEN

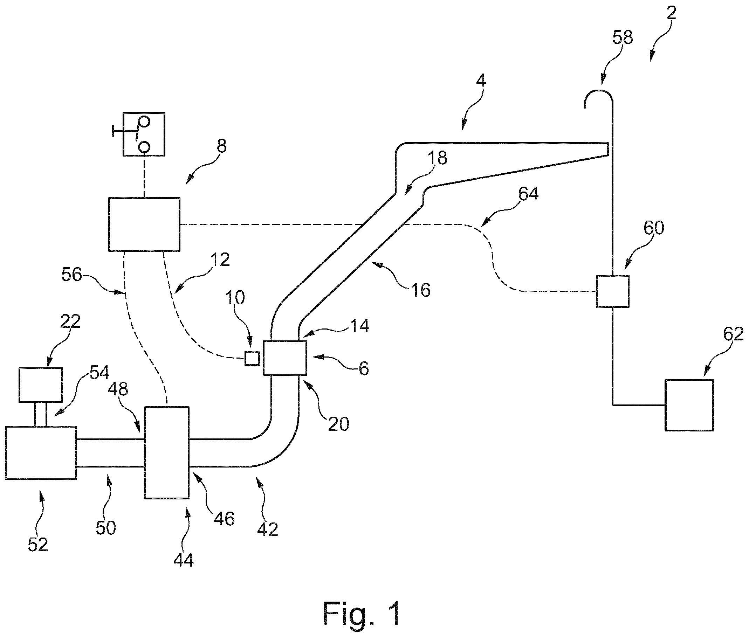

In der Fig. 1 ist eine vorteilhafte Ausgestaltung des Systems 2 schematisch dargestellt. Das System 2 umfasst eine Küchenspüle 4. Die Küchenspüle 4 kann nach Art eines Spülbeckens ausgebildet sein. Die Küchenspüle 4 kann einen Teil eines Küchenkabinenmonuments für ein Fahrzeug bilden. Somit kann das System 2 die Küchenspüle 4 eines Küchenkabinenmonuments eines Fahrzeugs umfassen. In diesem Fall kann das System 2 von dem Fahrzeug oder dem Küchenkabinenmonument eines Fahrzeugs umfasst sein. Die Küchenspüle 4 dient zur Aufnahme von Fluid, insbesondere flüssigen Abwässern. In die Küchenspüle können beispielsweise Reste aus Getränkeflaschen und/oder Getränkedosen gegossen werden. Die Küchenspüle dient zwar bevorzugt zur Aufnahme von Flüssigkeiten, jedoch können in derartige Flüssigkeiten auch Feststoffe eingemischt sein. Die Küchenspüle 4 weist eine Ablauföffnung 18 auf. Die Ablauföffnung 18 ist mittels einer ersten Fluidleitung 16 mit einem Eingang 14 eines Selbstregelventils 6 verbunden, welches erfindungsgemäß dem weiter unten beschriebenen Selbstregelventil 70 entspricht.

Im Folgenden soll ein exemplarischer Aufbau und/oder eine exemplarische Funktionsweise des Selbstregelventils 6 erläutert werden, wie es beispielhaft für das System 2 verwendet werden kann. Andere Ausgestaltungen des Selbstregelventils sind jedoch möglich.

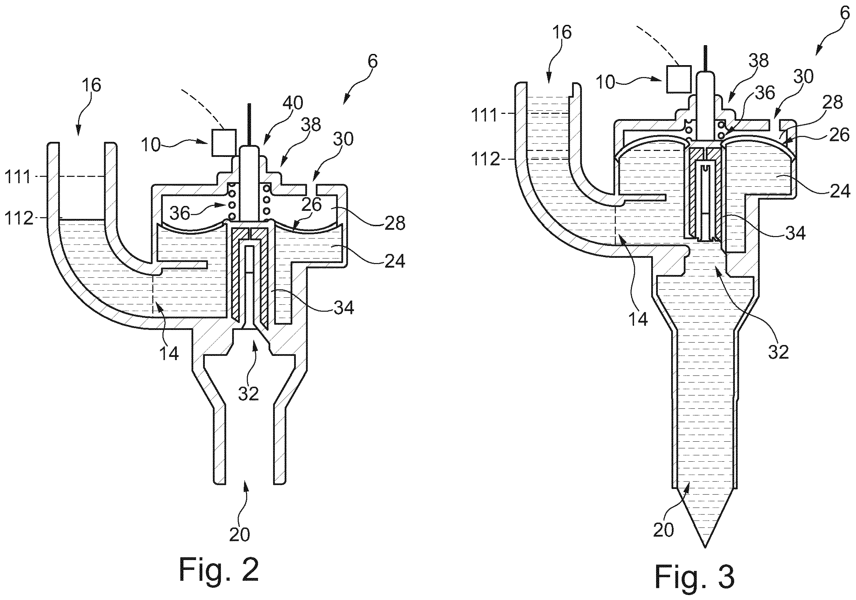

In der Fig. 2 ist eine exemplarische Ausgestaltung des Selbstregelventils 6 in einer schematischen Querschnittsansicht gezeigt, welches jedoch nicht das erfindungsgemäße Rückschlagventil aufweist. Das Selbstregelventil 6 weist einen Eingang 14 und einen Ausgang 20 auf. Der Eingang 14 des Selbstregelventils 6 ist mit der ersten Fluidleitung 16 verbunden, so dass Fluid, insbesondere Flüssigkeit, aus der Küchenspüle 4 durch die Ablauföffnung 18 und sodann durch die erste Fluidleitung 16 in den Eingang 14 des Selbstregelventils 6 strömen kann. Dazu ist das Selbstregelventil 6 unterhalb des Ablaufs 18 der Küchenspüle 4 angeordnet. Das Selbstregelventil 6 ist dazu ausgebildet, selbsttätig zwischen einem Schließzustand, wie dieser in Fig. 2 dargestellt ist, und einem Öffnungszustand, wie dieser in Fig. 3 dargestellt ist, zu schalten.

Strömt Fluid, insbesondere Flüssigkeit, durch den Eingang 14 in das Selbstregelventil 6 ein, so gelangt das Fluid zunächst in eine erste Kammer 24 des Selbstregelventils 6. Die erste Kammer 24 ist durch eine Membran 26, die als membranartige Trennwand wirkt, von einer zweiten Kammer 28 des Selbstregelventils 6 getrennt. Die zweite Kammer 28 ist durch einen ersten Kanal 30 mit der Umgebungsluft zu dem Selbstregelventil 6 gekoppelt. An der von der Membran 26 abgewandten Seite der ersten Kammer 24 ist eine Ausströmöffnung 32 vorgesehen, die als Verbindungskanal zu dem Ausgang 20 des Selbstregelventils 6 dient. Außerdem weist das Selbstregelventil 6 einen Kolben 34 auf. Der Kolben 34 ist mit der Membran 26 mechanisch verbunden und erstreckt sich innerhalb der ersten Kammer 24 von der Membran 26 in Richtung der Auslassöffnung 32. Dabei sind die Membran 26 und der Kolben 34 derart ausgebildet, dass der Kolben 34 die Auslassöffnung 32 freigibt, so dass das Selbstregelventil 6 in einem Öffnungszustand ist, wenn eine vorbestimmte, erste Menge M1 von Fluid, oder mehr, in der ersten Fluidleitung 16 ist. Die vorbestimmte, erste Menge M1 von Fluid ist durch eine entsprechende Pegelmarkierung in Fig. 2 angedeutet.

In Fig. 3 ist das Selbstregelventil 6 aus Fig. 2 dargestellt, wobei in der ersten Fluidleitung 16 eine Menge von Fluid ist, die größer als die vorbestimmte, erste Menge M1 von Fluid ist. Somit öffnet das Selbstregelventil 6 selbstständig und ist damit in dem Öffnungszustand. Bei dem Erreichen der vorbestimmten, ersten Menge M1 in der ersten Fluidleitung 16 steigt der Druck in der ersten Kammer 24, und zwar so weit, dass sich die Membran 26 derart weit in Richtung der zweiten Kammer 28 wölbt, dass der mit der Membran 26 verbundene Kolben 34 von der Auslassöffnung 32 wegbewegt wird und damit die Auslassöffnung 32 von der ersten Kammer 24 zu dem Ausgang 20 freigibt. Nunmehr kann Flüssigkeit aus der ersten Fluidleitung 16 durch die erste Kammer 24 und der Auslassöffnung 32 zu dem Ausgang 20 des Selbstregelventils 6 strömen. Damit sinkt die Menge des Fluids in der ersten Fluidleitung 16.

Sinkt die Menge von Fluid in der ersten Fluidleitung 16 auf eine vorbestimmte, zweite Menge M2 von Fluid, schließt das Selbstregelventil selbstständig, so dass das Selbstregelventil 6 in dem Schließzustand ist, wie es in Fig. 2 dargestellt ist. Durch das Ausströmen von Fluid aus dem Ausgang 20 des Selbstregelventils 6 sinkt der Fluidpegel in der ersten Fluidleitung 16, so dass auch ein entsprechender Druck in der ersten Kammer 24 kleiner wird. Auf der von dem Kolben gegenüberliegenden Seite der Membran 26 erstreckt sich eine Feder 36 zu einer gegenüberliegenden Gehäusewandung 38 des Selbstregelventils 6. Übersteigt die auf die Membran 26 durch die Feder 36 hervorgerufene Federkraft eine Kraft, die durch die Flüssigkeit in der ersten Kammer 24 auf die Membran 36 hervorgerufen wird, so nimmt die Membran 26 eine in Richtung der ersten Kammer 24 gewölbte Stellung ein. Dies verursacht eine Bewegung des Kolbens 34 in Richtung der Ausströmöffnung 32, und zwar derart, dass der Kolben 34 die Ausströmöffnung 32 verschließt. In Abhängigkeit der Fluidmenge in der ersten Fluidleitung 16 verändert sich der Druck in der ersten Kammer 24 entsprechend, so dass das Selbstregelventil 6 mittels der Membran 26, der Feder 36 und dem Kolben 34 dazu ausgebildet ist, zwischen dem Öffnungszustand und dem Schließzustand selbsttätig zu schalten. Deshalb wird dieses Ventil auch als Selbstregelventil 6 bezeichnet.

Die vorangegangenen Erläuterungen des Selbstregelventils 6 gelten beispielhaft für eine von vielen Möglichkeiten zur Ausgestaltung eines entsprechenden Selbstregelventils 6. Für das System 2 ist es deshalb vorgesehen, dass das Selbstregelventil 6 derart ausgebildet ist, dass es bei einer vorbestimmten, ersten Menge M1 von Fluid in der ersten Fluidleitung 16 selbstständig öffnet, so dass das Selbstregelventil 6 in einem Öffnungszustand ist und Fluid aus der ersten Fluidleitung 16 durch das erste Selbstregelventil 6 strömen kann, und dass es bei einer vorbestimmten, zweiten Menge M2 von Fluid in der ersten Fluidleitung 16 selbstständig schließen kann, so dass das Selbstregelventil 6 in einem Schließzustand ist und die vorbestimmte, zweite Menge von Fluid als eine Restfluidmenge in der ersten Fluidleitung 16 verbleibt. Dabei ist es vorgesehen, dass die vorbestimmte, zweite Menge M2 von Fluid kleiner ist als die vorbestimmte, erste Menge M1 von Fluid.

Für das System 2 ist außerdem ein Sensor 10 vorgesehen. Der Sensor 10 ist in den Fig. 2 und 3 schematisch dargestellt. Der Sensor 10 ist zur Erfassung eines Zustands, insbesondere des Öffnungszustands oder des Schließzustands, des Selbstregelventils 6 ausgebildet. Dazu kann der Sensor 10 derart angeordnet und/oder ausgebildet sein, um die Position des Kolbens 34, oder einer damit verbundenen Kolbenstange 40, zu erfassen, um daraus den Zustand des Selbstregelventils 6 erfassen zu können.

Für das System 2 ist außerdem eine Steuereinheit 8 vorgesehen. Der Sensor 10 und die Steuereinheit 8 sind mittels einer ersten Signalverbindung 12 miteinander verbunden. Diese Signalverbindung 12 kann nach Art einer Signalleitungsverbindung oder nach Art einer telemetrischen Signalverbindung ausgestaltet sein. Außerdem ist der Sensor 10 zur Übertragung eines Sensorsignals, das den erfassten Zustand des Selbstregelventils 6 repräsentiert, an die Steuereinheit 8 ausgebildet. Somit erhält die Steuereinheit 8 die entsprechende Information über das Selbstregelventil 6, ob dieses in dem Öffnungszustand oder in dem Schließzustand ist. Die Steuereinheit 8 ist vorzugsweise zur Auswertung des Sensorsignals ausgebildet. Basierend auf dem übertragenen Sensorsignal ist die Steuereinheit 8 deshalb zur Ausgabe mindestens eines Steuersignals ausgebildet. Das Steuersignal kann einen Steuerbefehl zum Öffnen und/oder Schließen eines Ventils repräsentieren.

Außerdem ist es vorgesehen, dass der Ausgang 20 des Selbstregelventils 6 zumindest indirekt mit einer Unterdruckquelle 22 koppelbar ausgebildet ist. Für eine bevorzugte Ausgestaltung ist es dabei vorgesehen, dass der Ausgang 20 des Selbstregelventils 6 mittels einer zweiten Fluidleitung 42 mit einem ersten, steuerbaren Ventil 44 verbunden ist. Dabei kann sich die zweite Fluidleitung 42 von dem Ausgang 20 des Selbstregelventils 6 bis zu einem Eingang 46 des ersten, steuerbaren Ventils 44 erstrecken. Ein Ausgang 48 des ersten, steuerbaren Ventils 44 kann zumindest indirekt mit einer Unterdruckquelle 22 verbunden sein. Bevorzugt ist es dazu vorgesehen, dass das System 2 einen Abwassersammeltank 52 aufweist, wobei sich eine dritte Fluidleitung 50 oder ein Fluidleitungsnetz zwischen dem Ausgang 48 des zweiten, steuerbaren Ventils 44 und dem Abwassersammeltank 52 erstreckt. Der Abwassersammeltank 52 kann darüber hinaus mittels mindestens einer weiteren Fluidleitung 54 mit der Unterdruckquelle 22 verbunden sein. Dadurch kann ein von der Unterdruckquelle 22 bereitgestellter Unterdruck auf den Abwassersammeltank 52 und sodann mittels der dritten Fluidleitung 50 oder eines entsprechenden Fluidleitungsnetzes auf den Ausgang 48 des zweiten, steuerbaren Ventils 44 wirken. Der Abwassersammeltank 52 kann außerdem zum Sammeln von Abwässern von einer Bordtoilette des Flugzeugs dienen. Um zu verhindern, dass mögliche Gerüche und/oder Abwässer aus dem Abwassersammeltank 52 zu dem Selbstregelventil 6 oder sogar zu der Küchenspüle 4 strömen können, ist es bevorzugt vorgesehen, dass die Steuereinheit 8 mittels einer zweiten Signalverbindung 56 mit dem ersten, steuerbaren Ventil 44 verbunden ist. Mittels der zweiten Signalverbindung 56 kann das erste, steuerbare Ventil 44 von der Steuereinheit 8 durch Übertragung eines entsprechenden Steuersignals gesteuert werden. Dabei ist es vorgesehen, dass die Steuereinheit 8 mittels entsprechender Übertragung eines Steuersignals an das erste, steuerbare Ventil 44 dazu ausgebildet ist, das erste, steuerbare Ventil 44 zu schließen, sobald das Selbstregelventil 6 in einem Schließzustand ist. Außerdem ist bevorzugt vorgesehen, dass die Steuereinheit 8 mittels Übertragung eines, insbesondere weiteren, Steuersignals an das erste, steuerbare Ventil 44 dazu ausgebildet ist, das erste, steuerbare Ventil 44 zu öffnen, sobald das Selbstregelventil 44 in dem Öffnungszustand ist.

Steigt die Menge von Fluid in der ersten Fluidleitung 16 auf eine vorbestimmte, erste Menge M1 von Fluid, so öffnet sich das Selbstregelventil 6. Sodann ist das Selbstregelventil 6 in dem Öffnungszustand. Dies wird von dem Sensor 10 erfasst und ein entsprechendes Sensorsignal wird an die Steuereinheit 8 übertragen. Daraufhin sendet die Steuereinheit 8 ein Steuersignal an das erste, steuerbare Ventil 44, so dass sich dieses öffnet. Damit wird ein von der Unterdruckquelle 22 bereitgestellter Unterdruck an dem Ausgang 20 des Selbstregelventils 6 bereitgestellt, was zu einem Strömen von Fluid durch das erste Selbstregelventil führt. Sinkt die Fluidmenge in der ersten Fluidleitung 16 auf die vorbestimmte, zweite Menge M2 von Fluid, schließt das Selbstregelventil 6. Die vorbestimmte, zweite Menge M2 Fluid ist also kleiner als die vorbestimmte, erste Menge M1 von Fluid. Das Selbstregelventil 6 ist sodann in dem Schließzustand. Der Sensor 10 erfasst diesen Schließzustand und sendet ein entsprechendes Sensorsignal an die Sensoreinheit 8. Daraufhin sendet die Steuereinheit 8 ein entsprechendes Steuersignal an das erste, steuerbare Ventil 44, so dass sich dieses schließt. Der zuvor erläuterte Ablauf bietet den Vorteil, dass die Fluidverbindung zwischen dem Abwassersammeltank 52 und dem Selbstregelventil 6 bzw. dem Abwassertank 52 und der Küchenspüle 4 nur dann hergestellt wird, wenn tatsächlich Fluid aus der ersten Fluidleitung 16 durch das erste Selbstregelventil 6 und sodann durch die zweite Fluidleitung 42 und das erste, steuerbare Ventil 44 in Richtung des Abwassersammeltanks 52 strömt. Hingegen wird die Fluidverbindung durch das erste, steuerbare Ventil 44 unmittelbar dann geschlossen, wenn auch das erste Selbstregelventil 6 schließt. Dabei verbleibt eine Restmenge von Fluid, nämlich die Restfluidmenge, in der ersten Fluidleitung 16. Indem das erste, steuerbare Ventil 44 unmittelbar nach oder mit dem Selbstregelventil 6 schließt, wird verhindert, dass ein Fluid oder Gerüche zu der Spüle 4 zurückströmen können. Dies gilt insbesondere für Abwässer aus dem Abwassersammeltank 52, die teilweise von einer Bordtoilette des Fahrzeugs stammen können. Deshalb bietet das System 2 den Vorteil, dass die Küchenspüle 4 besonders sicher, und insbesondere geruchs- und/oder rückströmsicher, an einen Abwassersammeltank 52 zumindest indirekt angeschlossen werden kann, der auch zum Sammeln von Abwässern einer Bordtoilette dienen kann.

Für eine weitere vorteilhafte Ausgestaltung des Systems ist eine Wasserzufuhrarmatur 58 zum Zuführen von Wasser, insbesondere Frischwasser, in die Küchenspüle 4 vorgesehen. Die Wasserzufuhrarmatur 58 kann nach Art eines gebogenen Rohrs und/oder eines Wasserhahns ausgebildet sein. Somit trifft ein aus der Wasserzufuhrarmatur 58 ausströmendes Wasser in die Küchenspüle 4. Das einströmende Wasser dient zum Spülen und/oder Reinigen der Küchenspüle 4. Daraufhin strömt das Wasser durch die Ablauföffnung 18 in die erste Fluidleitung 16.

Außerdem ist ein zweites steuerbares Ventil 60 für das System 2 vorgesehen. Das zweite steuerbare Ventil 60 ist zum Steuern eines Wasserstroms zu der Wasserzufuhrarmatur 58 ausgebildet. Dabei kann das zweite steuerbare Ventil an eine Wasserquelle 62 zumindest indirekt angeschlossen sein. So kann das zweite steuerbare Ventil 60 zwischen einem Rohrleitungsnetz, das zur Zuführung von Wasser dient, und der Wasserzufuhrarmatur 58 angeordnet und/oder integriert sein, so dass das zweite steuerbare Ventil 60 einen Wasserstrom von der Wasserquelle 62 zu der Wasserzufuhrarmatur 58 steuern kann. Darüber hinaus ist eine dritte Signalverbindung 64 zwischen der Steuereinheit 8 und dem zweiten steuerbaren Ventil 60 vorgesehen. Weiterhin ist die Steuereinheit 8 mittels einer Übertragung eines, insbesondere weiteren, Steuersignals an das zweite steuerbare Ventil 60 dazu ausgebildet, das zweite steuerbare Ventil 60 zu öffnen, sobald das Selbstregelventil 6 in dem Öffnungszustand ist. Dies bietet den Vorteil, dass Wasser durch die Wasserarmatur 58 in die Küchenspüle 4 einströmen kann, wenn Fluid aus der ersten Fluidleitung 16 abgesaugt wird. Um zu verhindern, dass durch das Absaugen hervorgerufene Geräuschemissionen durch die erste Fluidleitung 16 und sodann durch die Ablauföffnung 18 aus der Küchenspüle 4 in die Umgebung austreten, wird das zweite steuerbare Ventil 60 von der Steuereinheit 8 geöffnet, so dass Wasser während des Absaugens von Fluid aus der ersten Fluidleitung 16 in die Küchenspüle 4 und sodann durch die Ablauföffnung 18 in die erste Fluidleitung 16 nachfließen zu lassen. Durch dieses nachfließende Wasser werden mögliche Geräuschemissionen stark gedämpft oder sogar daran gehindert, aus der Küchenspüle 4 auszutreten. Darüber hinaus bietet das nachfließende Wasser den Vorteil, dass die Küchenspüle 4 regelmäßig gespült wird und/oder dass die Fluidrestmenge in der ersten Fluidleitung 16 zumindest einen Anteil von Wasser, insbesondere Frischwasser, aufweist, so dass mögliche Ablagerungen an einer Innenwand der ersten Fluidleitung 16 und/oder sogar Verstopfungen effektiv verhindert oder verringert werden können.

Damit die Fluidrestmenge in der ersten Fluidleitung 16 begrenzt wird, ist es bevorzugt vorgesehen, dass die Steuereinheit 8 mittels einer Übertragung eines, insbesondere weiteren, Steuersignals an das zweite steuerbare Ventil 60 dazu ausgebildet ist, das zweite steuerbare Ventil 60 zu schließen, sobald das Selbstregelventil 6 in dem Schließzustand ist. Somit wird die Zuführung von Wasser aus der Wasserzufuhrarmatur 58 beendet, sobald das Selbstregelventil 6 in dem Schließzustand ist. Dabei kann ein noch in der Küchenspüle 4 zwischenzeitlich gesammeltes Wasser durch die Ablauföffnung 18 in die erste Fluidleitung 16 strömen, was den zuvor erläuterten Vorteil bietet.

Gemäß einer weiteren vorteilhaften Ausgestaltung ist es vorgesehen, dass die Steuereinheit 8 mittels einer Übertragung eines, insbesondere weiteren, Steuersignals an das zweite steuerbare Ventil 60 dazu ausgebildet ist, das zweite steuerbare Ventil 60 nach einem Ablauf einer Verzögerungszeit im Anschluss an den erfassten Schließzustand des Selbstregelventils 6 zu schließen. Diese Ausgestaltung kann vorzugsweise als eine alternative Ausgestaltung zu der zuvor erläuterten Ausgestaltung des Systems 2 sein. Indem das zweite steuerbare Ventil 60 verzögert geschlossen wird, kann eine weitere Menge von Wasser aus der Wasserzufuhrarmatur 58 in die Spüle 4 strömen, nachdem das Selbstregelventil 6 geschlossen ist. Durch die vorbestimmte Wahl der Verzögerungszeit kann sichergestellt werden, dass eine vorbestimmte Menge von Wasser aus der Wasserzufuhrarmatur 58 in die erste Fluidleitung 16 strömt, nachdem das erste Selbstregelventil 6 geschlossen ist. Dies führt zu einem weiteren Spüleffekt in der ersten Fluidleitung 16 und kann zur Vergrößerung des Frischwasseranteils der Restfluidmenge in der ersten Fluidleitung 16 beitragen. Dies verbessert weiterhin den störungsfreien Gebrauch des Systems 2.

Für eine weitere vorteilhafte Ausgestaltung weist das System 2 eine Eingabeeinheit 66 auf. Die Eingabeeinheit 66 kann einen Taster umfassen. Dabei kann die Eingabeeinheit 66 dem Küchenkabinenmonument des Fahrzeugs zugeordnet sein. Somit kann das Personal des Flugzeugs durch Betätigung der Eingabeeinheit 66, insbesondere eines zugehörigen Tasters, ein Steuersignal generieren. Die Eingabeeinheit 66 ist mittels einer weiteren Signalverbindung 68 mit der Steuereinheit 8 verbunden. Somit ist die Steuereinheit 8 mittels der Eingabeeinheit 66, und zwar vorzugsweise durch Übertragung eines Signals, das eine Eingabe an der Eingabeeinheit 66 repräsentiert, steuerbar. Dabei ist die Steuereinheit 8 dabei durch die Eingabeeinheit 66, bzw. durch ein von der Eingabeeinheit 66 generiertes Signal, derart steuerbar, um das erste, steuerbare Ventil 44 und/oder das zweite, steuerbare Ventil 60 zu steuern. So kann das erste oder das zweite steuerbare Ventil 44, 60 basierend auf der Eingabe an der Eingabeeinheit 66 geöffnet und/oder geschlossen werden. Mittels der Eingabeeinheit 66 kann beispielsweise das erste steuerbare Ventil 44 geöffnet werden, um die Fluidrestmenge aus der ersten Fluidleitung 16 abzusaugen. Weiterhin kann das zweite steuerbare Ventil 60 geöffnet werden, um eine Wasserzufuhr durch die Wasserarmatur 58 in die Küchenspüle 4 manuell einzuleiten. Die Eingabeeinheit 66 kann beispielsweise dazu verwendet werden, um die fluidleitenden Teile des Systems 2 zu spülen und/oder zu reinigen, wenn das Flugzeug am Boden ist.

Eine weitere vorteilhafte Ausgestaltung des Systems 2 zeichnet sich dadurch aus, dass die Steuereinheit 8 zum Empfang eines Instruktionssignals von einer übergeordneten Kontrolleinheit (nicht dargestellt) ausgebildet ist, wobei die Steuereinheit 8 basierend auf dem Instruktionssignal derart steuerbar ist, um das erste steuerbare Ventil 44 zu öffnen oder zu schließen und/oder um das zweite steuerbare Ventil 60 zu öffnen oder zu schließen. Analog zu der Eingabeeinheit 66 und einem von diesem generierten Signal kann von der Kontrolleinheit ein entsprechendes Instruktionssignal generiert werden, wenn das Flugzeug beispielsweise am Boden ist, um eine Reinigung der fluidleitenden Teile des Systems 8 vorzunehmen.

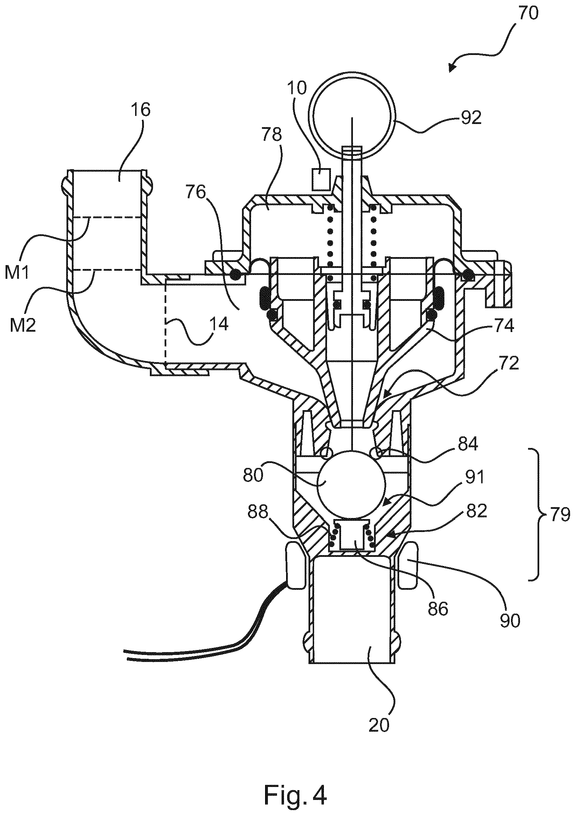

Fig. 4 zeigt ein Ausführungsbeispiel eines erfindungsgemäßen Selbstregelventils 70, das gegenüber dem Selbstregelventil 6 aus den Fig. 2 und 3 leicht modifiziert ist. Das Selbstregelventil 70 weist eine erste Auslassöffnung 72 auf, die durch einen aufschwimmbaren Kolben 74 verschließbar ist, in Analogie zu den Beispielen der Figuren 2 und 3. Gerät folglich ein Fluid aus einer ersten Fluidleitung 16 in eine erste Kammer 76 des Selbstregelventils 70, wird der Kolben 74 gegen die durch die Feder 36 aufgebrachte Kraft nach oben bewegt, wenn das Fluid in der ersten Fluidleitung den Grenzpegel M1 erreicht. Die erste Auslassöffnung 72 wird damit freigegeben und das Fluid kann aus der ersten Kammer 76 durch die erste Auslassöffnung 72 abfließen.

Die Feder 36 weist bevorzugt eine solche Federkonstante auf, die das Öffnen des Kolbens 74 bei bereits relativ geringen Druckunterschieden zwischen der ersten Kammer 76 und einer zweiten Kammer 78 oberhalb des Kolbens 74 erlaubt. Damit wird eine zuverlässige Funktion gewährleistet, durch die in der ersten Fluidleitung 16 angesammeltes Fluid zuverlässig durch die erste Auslassöffnung 72 abgegeben werden kann. Aufgrund der relativ geringen Federkraft der Feder 36, die auf den Kolben 74 wirkt, können in der Nähe des Schließzustandes des Selbstregelventils 70 Schwingungsphänomene bei der Bewegung des Kolbens 74 auftreten. Zum weiteren Verbessern der Schließwirkung des Selbstregelventils 70 und zum weiteren Verbessern des Verhinderns einer Rückströmung aus einem stromabwärts des Ausgangs 20 folgenden Vakuumsystems in die erste Fluidleitung 16 ist ein Rückschlagventil 79 vorgesehen, das in dem dargestellten Fall als integraler Bestandteil des Selbstregelventils 70 ausgeführt ist.

Das Rückschlagventil 79 weist eine Schwimmerkugel 80 auf, die sich unterhalb der ersten Auslassöffnung 72 befindet. Die Kugel 80 wird durch eine Spanneinrichtung 82 gegen einen Dichtsitz 84 direkt unterhalb der ersten Auslassöffnung 72 gedrückt, so dass die Funktion des Rückschlagventils erreicht wird.

In dem gezeigten Beispiel ist die Spanneinrichtung 82 mit einem Haltestempel 86, einer zweiten Feder 88 und einer Magneteinrichtung 90 in einer konzentrischen Anordnung ausgestaltet. Der Haltestempel 86 wird über die zweite Feder 88 an die Schwimmerkugel 80 an einer der Dichtfläche 84 entgegengesetzten Seite der Schwimmerkugel 80 in Richtung der ersten Auslassöffnung 72 gedrückt.

Die Kraft der zweiten Feder 88 ist auf diesen Anwendungsfall für eine Druckdifferenz zwischen dem Eingang und dem Ausgang 20 des Selbstregelventils 70 angepasst, damit ein sicheres Ablaufen des Fluids nicht behindert wird. Die Haltekraft der zweiten Feder 88 muss jedoch auch so groß sein, dass eine Rückströmung zwischen dem Auslass 20 und dem Einlass 16 ebenso zuverlässig verhindert wird und die genannten Schwingungsphänomene reduziert bzw. die dadurch entstehenden Geräusche durch eine Verbindung zu einem Vakuumsystem eliminiert werden.

Das dauerhafte Andrücken der Schwimmerkugel 80 an den Dichtsitz 84 würde allerdings eine vollständige Drainage des Selbstregelventils 70 am Boden verhindern, wenn kein ausreichender Unterdruck zwischen dem Eingang und dem Ausgang 20 vorhanden ist. Um diese Funktion dennoch erfüllen zu können, ist die Spanneinrichtung 82 dazu eingerichtet, einen ersten Spannzustand und einen zweiten Spannzustand einzunehmen. In dem ersten Spannzustand wird eine vordefinierte Kraft auf den Schwimmkörper 80 in Richtung des Dichtsitzes 84 aufgebracht. In dem zweiten Spannzustand wird eine in Richtung des Dichtsitzes 84 wirkende Kraft im Wesentlichen eliminiert, so dass die Schwimmerkugel 80 freiliegt. Je nach Ausführung der Spanneinrichtung 82 kann dies auf unterschiedliche Weise durchgeführt werden.

Beispielhaft ist die Magneteinrichtung 90 in Zusammenwirkung mit dem Haltestempel 86 so ausgeführt sein, dass diese dauerhaft eine Kraft auf den Haltestempel 86 ausübt, um den Haltestempel 86 fest an die Schwimmerkugel 80 zu drücken. Bevorzugt könnte der Magnet 90 derart ausgeführt sein, dass durch Anlegen einer elektrischen Spannung die durch den Magneten 90 und die Feder aufgebrachte Kraft weitgehend aufgehoben wird. Wird etwa eine Spülung des Selbstregelventils 70 bei fehlendem Differenzdruck initiiert, kann eine elektrische Spannung an die Magneteinrichtung 90 angelegt werden. Dies kann manuell oder beim Detektieren des Anhebens des Kolbens 74 über einen Sensor 10 in Analogie zu den Figuren 2 und 3 über eine Steuereinheit in einem solchen Betriebszustand des Flugzeugs automatisch durchgeführt werden. Zum Anheben des Kolbens 74 kann etwa ein Ring 92 an diesem angebracht sein.

Selbstverständlich kann die Spanneinrichtung 82 auch auf gänzlich andere Weise realisiert werden. Beispielhaft seien hier elektrische oder pneumatische Aktuatoren genannt, wobei elektrische Aktuatoren beispielhaft durch Schrittmotoren ausgeführt sein können.

Die Funktion des Selbstregelventils 70 kann für die einzelnen zu erwartenden Betriebszustände wie folgt sein. Während des Flugs des Flugzeugs mit einer Ausstattung beispielsweise gemäß Fig. 1 ist ein ausreichender Differenzdruck zwischen dem Eingang und dem Ausgang 20 vorhanden, so dass das Selbstregelventil 70 ein Ablassen eines Fluids aus der ersten Fluidleitung bei Erreichen eines Mindestpegels M1 durchführt. Hierbei wird der Kolben 74 durch das in die erste Kammer 76 strömende Fluid angehoben, so dass das Fluid durch die erste Auslassöffnung 72 in Richtung der Schwimmerkugel 80 strömt. Aufgrund des im Fluge ausreichenden Differenzdrucks öffnet die Kugel 80 und lässt das Fluid durch eine zweite Auslassöffnung 91 passieren. Ist das Fluid durchgelaufen und der Pegel M2 wieder erreicht, schließt der Kolben 74 und lässt folglich keine Luft durch die erste Auslassöffnung 72 strömen. Da kein weiterer Durchfluss des Fluids stattfindet, schließt anschließend auch die Schwimmerkugel 80, indem sie auf ihren Dichtsitz 84 gedrückt wird.

Ist das Flugzeug am Boden und liegt ein Unterdruck an dem Ausgang 20 an, verhält sich die Funktion des Ventils 70 wie vorangehend für den Betriebszustand des Flugs beschrieben. Dies setzt voraus, dass der Differenzdruck zwischen dem Eingang 16 und dem Auslass 20 ausreicht.

Ist beim Bodenaufenthalt des Flugzeugs kein ausreichender Differenzdruck vorhanden, hebt sich der Kolben 74 bei vorhandenem Fluid in der Fluidleitung 16 zwar an und lässt das Fluid bis zu der Schwimmerkugel 80 strömen. Jedoch kann das Fluid an der Schwimmerkugel 80 nicht vorbeifließen.

Ist dies, beispielsweise bei der Drainage zum Erreichen des Frostschutzes, gewünscht, wird die Spanneinrichtung 82 derart angesteuert, dass der Haltestempel 86 die Schwimmerkugel 80 freigibt und folglich das Fluid an der Schwimmerkugel 80 drucklos vorbeifließen kann. Da die Schwimmerkugel 80 in diesem Fall nicht von der Spanneinrichtung 82 gehalten wird bzw. nicht gegen den Dichtsitz 84 gedrückt wird, ist sie normalerweise geöffnet. Bei einer eventuell doch einsetzenden Rückströmung von Fluid zu dem Eingang hin würde sie jedoch unmittelbar aufschwimmen und hierbei selbsttätig den Dichtsitz 84 wieder verschließen.

Zusätzlich hierzu kann eine weitere Funktion integriert werden, die ein Verkleben des Ventils verhindern kann. Nach jeder Nutzung des Selbstregelventils 70 kann eine kurze Nachspülung mit frischem Wasser stattfinden. Hierzu muss ein Spülvorgang detektiert werden. Es kann davon ausgegangen werden, dass ein Spülvorgang stattfindet, wenn der Haltestempel 86 bewegt wird. Die Magneteinrichtung 90, falls diese vorhanden ist, könnte hierbei als Sensor für die Position des Haltestempels 86 eingesetzt werden. Da die Magneteinrichtung 90 in diesem Fall passiv ist, kann sie als induktiver Wegaufnehmer mit dem Haltekörper 86 als bewegbarer Kern wirken. Wird die Spanneinrichtung auf andere Weise realisiert, könnte ein zusätzlicher Sensor angeordnet werden, der beispielsweise dem Sensor 10 an dem Kolben 74 entsprechen könnte.

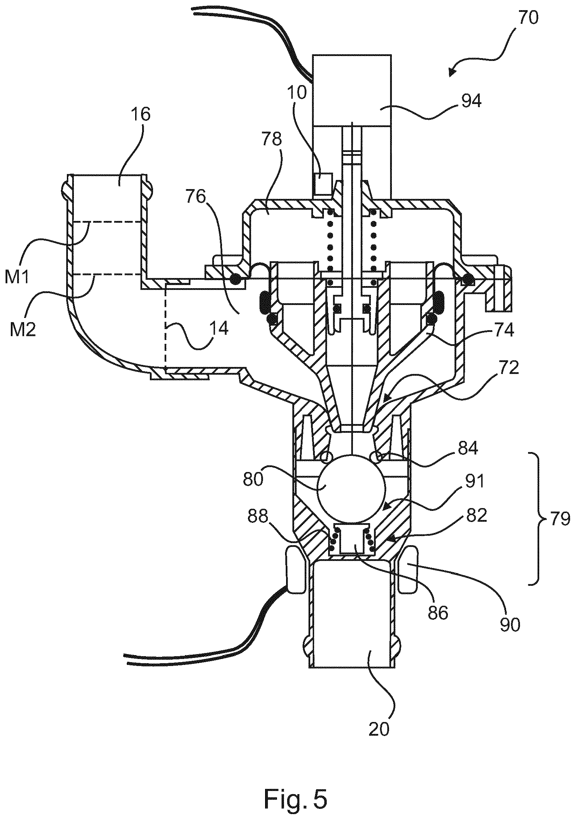

Fig. 5 zeigt weiterhin das Selbstregelventil 70 aus Fig. 4, bei dem der Ring 92 eliminiert und stattdessen eine Anhebevorrichtung 94 vorgesehen ist. Diese könnte beispielhaft als ein Elektromagnet oder ein elektrischer Aktuator ausgeführt sein und beim Spülen des Selbstregelventils 70 den Kolben 74 anhebt.

Ergänzend sei darauf hingewiesen, dass "aufweisend" keine anderen Elemente oder Schritte ausschließt und "ein" oder "eine" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. System (2) zur Entsorgung von Fluid aus einer Küchenspüle (4), aufweisend:
eine Küchenspüle (4) für ein Küchenkabinenmonument eines Fahrzeugs, ein Selbstregelventil (6; 70), eine Steuereinheit (8), einen Sensor (10), und eine erste Signalverbindung (12) zwischen dem Sensor (10) und der Steuereinheit (8),
wobei ein Eingang (14) des Selbstregelventils (6; 70) mit einer ersten Fluidleitung (16) verbunden ist, die zumindest indirekt mit einer Ablauföffnung (18) der Küchenspüle (4) verbunden ist,
wobei das Selbstregelventil (6; 70) unterhalb der Ablauföffnung (18) der Küchenspüle (4) angeordnet ist, so dass Fluid aus der Küchenspüle (4) durch die zugehörige Ablauföffnung (18) in die erste Fluidleitung (16) fließen kann,
wobei ein Ausgang (20) des Selbstregelventils (6; 70) zumindest indirekt mit einer Unterdruckquelle (22) koppelbar ausgebildet ist, und
wobei das Selbstregelventil (6; 70) dazu ausgebildet ist, bei einer vorbestimmten, ersten Menge M1 von Fluid in der ersten Fluidleitung (16) selbstständig zu öffnen, so dass das Selbstregelventil (6; 70) in einem Öffnungszustand ist und Fluid aus der ersten Fluidleitung (16) durch das Selbstregelventil (6) strömen kann, und bei einer vorbestimmten, zweiten Menge M2 von Fluid in der ersten Fluidleitung (16) selbstständig zu schließen, so dass das Selbstregelventil (6; 70) in einem Schließzustand ist und die vorbestimmte, zweite Menge M2 von Fluid als eine Fluidrestmenge in der ersten Fluidleitung (16) verbleibt,
wobei der Sensor (10) zur Erfassung des Öffnungszustands oder des Schließzustands des Selbstregelventils (6; 70) ausgebildet ist,
wobei der Sensor (10) zur Übertragung eines Sensorsignals, das den erfassten Zustand des Selbstregelventils (6; 70) repräsentiert, an die Steuereinheit (8) ausgebildet ist,
wobei die Steuereinheit (8), basierend auf dem übertragenen Sensorsignal, zur Ausgabe mindestens eines Steuersignals ausgebildet ist,
**dadurch gekennzeichnet, dass** das Selbstregelventil (6; 70) ein Rückschlagventil (79) aufweist, das einen durch eine Schwimmerkugel (80) verschließbaren Dichtsitz (84) besitzt und dazu eingerichtet ist, einen Rückfluss eines Fluids von dem Ausgang (20) zu dem Eingang (14) des Selbstregelventils (6; 70) zu verhindern, wobei das Rückschlagventil (79) direkt stromaufwärts des Ausgangs (20) angeordnet ist.

2. System (2) nach dem vorhergehenden Anspruch, **gekennzeichnet durch** ein erstes steuerbares Ventil (44), dessen Ausgang (48) zumindest indirekt mit einer Unterdruckquelle (22) zum Absaugen von Fluid koppelbar ausgebildet ist, eine Fluidverbindung (42) zwischen einem Ausgang (20) des Selbstregelventils (6; 70) und einem Eingang (46) des ersten steuerbaren Ventils (44), und eine zweite Signalverbindung (56) zwischen der Steuereinheit (8) und dem ersten steuerbaren Ventil (44), wobei die Steuereinheit (8) mittels einer Übertragung eines Steuersignals an das erste steuerbare Ventil (44) dazu ausgebildet ist, das erste steuerbare Ventil (44) zu schließen, wenn und/oder sobald das Selbstregelventil (6; 70) in dem Schließzustand ist.

3. System (2) nach dem vorhergehenden Anspruch, **dadurch gekennzeichnet, dass** die Steuereinheit (8) mittels einer Übertragung eines Steuersignals an das erste steuerbare Ventil (44) dazu ausgebildet ist, das erste steuerbare Ventil (44) zu öffnen, wenn und/oder sobald das Selbstregelventil (6; 70) in dem Öffnungszustand ist.

4. System (2) nach einem der vorhergehenden Ansprüche, **gekennzeichnet durch** eine Wasserzufuhrarmatur (58) zum Zuführen von Wasser in die Küchenspüle (4), ein zweites steuerbares Ventil (60), das zum Steuern eines Wasserstroms zu der Wasserzufuhrarmatur (58) ausgebildet ist, und eine dritte Signalverbindung (64) zwischen der Steuereinheit (8) und dem zweiten steuerbaren Ventil (60), wobei die Steuereinheit (8) mittels einer Übertragung eines Steuersignals an das zweite steuerbare Ventil (60) dazu ausgebildet ist, das zweite steuerbare Ventil (60) zu öffnen, wenn und/oder sobald das Selbstregelventil (6; 70) in dem Öffnungszustand ist.

5. System (2) nach dem vorhergehenden Anspruch, **dadurch gekennzeichnet, dass** die Steuereinheit (8) mittels einer Übertragung eines Steuersignals an das zweite steuerbare Ventil (60) dazu ausgebildet ist, das zweite steuerbare Ventil (60) zu schließen, wenn und/oder sobald das Selbstregelventil (6; 70) in dem Schließzustand ist oder nach einem Ablauf einer Verzögerungszeit im Anschluss an den erfassten Schließzustand des Selbstregelventils (6) zu schließen.

6. System (2) nach einem der vorhergehenden Ansprüche 2 bis 5, **gekennzeichnet durch** eine Eingabeeinheit (66), insbesondere einen Taster, und eine Signalverbindung (68) zwischen der Eingabeeinheit (66) und der Steuereinheit (8), wobei die Steuereinheit (8) mittels der Eingabeeinheit (66) derart steuerbar ist, um das erste steuerbare Ventil (44) zu öffnen oder zu schließen und/oder um das zweite steuerbare Ventil (60) zu öffnen oder zu schließen.

7. System (2) nach einem der vorhergehenden Ansprüche 2 bis 6, **dadurch gekennzeichnet, dass** die Steuereinheit (8) zum Empfang eines Instruktionssignals von einer übergeordneten Kontrolleinheit ausgebildet ist, wobei die Steuereinheit (8) basierend auf dem Instruktionssignal derart steuerbar ist, um das erste steuerbare Ventil (44) zu öffnen oder zu schließen und/oder um das zweite steuerbare Ventil (60) zu öffnen oder zu schließen.

8. System (2) nach einem der vorhergehenden Ansprüche, wobei das Rückschlagventil eine selektiv lösbare Spanneinrichtung aufweist, die eine zusätzliche Haltekraft auf die Schwimmerkugel in Richtung des Dichtsitzes ausübt.

9. Fahrzeug mit einem System (2) nach einem der vorhergehenden Ansprüche.

10. Verfahren zum Steuern eines Systems (2) nach einem der vorhergehenden Ansprüche 1 bis 8, aufweisend die Schritte:
- Erfassen des Zustands des Selbstregelventils (6; 70), und
- Übertragen des Sensorsignals von dem Sensor (10) an die Steuereinheit (8), wobei das Sensorsignal den erfassten Zustand des Selbstregelventils (6, 70) repräsentiert.

11. Verfahren nach dem vorhergehenden Anspruch zum Steuern eines Systems nach Anspruch 2, **gekennzeichnet durch** den Schritt: Schließen des ersten steuerbaren Ventils (44) durch Übertragen eines Steuersignals von der Steuereinheit (8) an das erste steuerbare Ventil (44), wenn und/oder sobald das Selbstregelventil (6; 70) in dem Schließzustand ist.

12. Verfahren nach einem der vorhergehenden Ansprüche 10 bis 11, **gekennzeichnet durch** den Schritt: Öffnen des ersten steuerbaren Ventils (44) durch Übertragen eines Steuersignals von der Steuereinheit (8) an das erste steuerbare Ventil (44), wenn und/oder sobald das Selbstregelventil (6; 70) in dem Öffnungszustand ist.

13. Verfahren nach einem der vorhergehenden Ansprüche 10 bis 12 zum Steuern eines Systems nach Anspruch 4, **gekennzeichnet durch** den Schritt: Öffnen des zweiten steuerbaren Ventils (60) durch Übertragen eines Steuersignals von der Steuereinheit (8) an das zweite steuerbare Ventil (60), wenn und/oder sobald das Selbstregelventil (6; 70) in dem Offnungszustand ist.

14. Verfahren nach einem der vorhergehenden Ansprüche 10 bis 13 zum Steuern eines Systems nach Anspruch 4, **gekennzeichnet durch** den Schritt: Schließen des zweiten steuerbaren Ventils (60) durch Übertragen eines Steuersignals von der Steuereinheit (8) an das zweite steuerbare Ventil (60), wenn und/oder sobald das Selbstregelventil (6; 70) in dem Schließzustand ist oder nach Ablauf einer Verzögerungszeit im Anschluss an den erfassten Schließzustand des Selbstregelventils (6; 70).

## Claims

1. System (2) for disposing of fluid from a kitchen sink (4), having:
a kitchen sink (4) for a kitchen cabinet monument of a vehicle, a self-regulating valve (6; 70), a control unit (8), a sensor (10), and a first signal connection (12) between the sensor (10) and the control unit (8), wherein an inlet (14) of the self-regulating valve (6; 70) is connected to a first fluid line (16) which is at least indirectly connected to a discharge opening (18) of the kitchen sink (4),
wherein the self-regulating valve (6; 70) is arranged below the discharge opening (18) of the kitchen sink (4), with the result that fluid from the kitchen sink (4) can flow into the first fluid line (16) through the associated discharge opening (18),
wherein an outlet (20) of the self-regulating valve (6; 70) can be at least indirectly coupled to a vacuum source (22), and
wherein the self-regulating valve (6; 70) is designed to independently open in the case of a predetermined first amount M1 of fluid in the first fluid line (16), with the result that the self-regulating valve (6; 70) is in an open state and fluid can flow from the first fluid line (16) through the self-regulating valve (6), and to independently close in the case of a predetermined second amount M2 of fluid in the first fluid line (16), with the result that the self-regulating valve (6; 70) is in a closed state and the predetermined second amount M2 of fluid remains in the first fluid line (16) as a remaining amount of fluid,
wherein the sensor (10) is designed to capture the open state or the closed state of the self-regulating valve (6; 70),
wherein the sensor (10) is designed to transmit a sensor signal representing the captured state of the self-regulating valve (6; 70) to the control unit (8),
wherein the control unit (8) is designed to output at least one control signal on the basis of the transmitted sensor signal,
**characterized in that** the self-regulating valve (6; 70) has a non-return valve (79) which has a sealing seat (84) closable by means of a float ball (80) and is configured to prevent a return flow of a fluid from the outlet (20) to the inlet (14) of the self-regulating valve (6; 70), wherein the non-return valve (79) is arranged directly upstream of the outlet (20).

2. System (2) according to the preceding claim, **characterized by** a first controllable valve (44), the outlet (48) of which can be at least indirectly coupled to a vacuum source (22) for aspirating fluid, a fluid connection (42) between an outlet (20) of the self-regulating valve (6; 70) and an inlet (46) of the first controllable valve (44), and a second signal connection (56) between the control unit (8) and the first controllable valve (44), wherein the control unit (8) is designed, by transmitting a control signal to the first controllable valve (44), to close the first controllable valve (44) if and/or as soon as the self-regulating valve (6; 70) is in the closed state.

3. System (2) according to the preceding claim, **characterized in that** the control unit (8) is designed, by transmitting a control signal to the first controllable valve (44), to open the first controllable valve (44) if and/or as soon as the self-regulating valve (6; 70) is in the open state.

4. System (2) according to one of the preceding claims, **characterized by** a water supply fitting (58) for supplying water to the kitchen sink (4), a second controllable valve (60) which is designed to control a water flow to the water supply fitting (58), and a third signal connection (64) between the control unit (8) and the second controllable valve (60), wherein the control unit (8) is designed, by transmitting a control signal to the second controllable valve (60), to open the second controllable valve (60) if and/or as soon as the self-regulating valve (6; 70) is in the open state.

5. System (2) according to the preceding claim, **characterized in that** the control unit (8) is designed, by transmitting a control signal to the second controllable valve (60), to close the second controllable valve (60) if and/or as soon as the self-regulating valve (6; 70) is in the closed state or to close it after expiry of a delay time following the captured closed state of the self-regulating valve (6).

6. System (2) according to one of the preceding Claims 2 to 5, **characterized by** an input unit (66), in particular a button, and a signal connection (68) between the input unit (66) and the control unit (8), wherein the control unit (8) can be controlled, by means of the input unit (66), to open or close the first controllable valve (44) and/or to open or close the second controllable valve (60) .

7. System (2) according to one of the preceding Claims 2 to 6, **characterized in that** the control unit (8) is designed to receive an instruction signal from a superordinate monitoring unit, wherein the control unit (8) can be controlled, on the basis of the instruction signal, to open or close the first controllable valve (44) and/or to open or close the second controllable valve (60).

8. System (2) according to one of the preceding claims, wherein the non-return valve has a selectively releasable clamping device which exerts an additional holding force on the float ball in the direction of the sealing seat.

9. Vehicle having a system (2) according to one of the preceding claims.

10. Method for controlling a system (2) according to one of the preceding Claims 1 to 8, having the steps of:
- capturing the state of the self-regulating valve (6; 70), and
- transmitting the sensor signal from the sensor (10) to the control unit (8), wherein the sensor signal represents the captured state of the self-regulating valve (6, 70).

11. Method according to the preceding claim for controlling a system according to Claim 2, **characterized by** the step of: closing the first controllable valve (44) by transmitting a control signal from the control unit (8) to the first controllable valve (44) if and/or as soon as the self-regulating valve (6; 70) is in the closed state.

12. Method according to one of the preceding Claims 10 to 11, **characterized by** the step of: opening the first controllable valve (44) by transmitting a control signal from the control unit (8) to the first controllable valve (44) if and/or as soon as the self-regulating valve (6; 70) is in the open state.

13. Method according to one of the preceding Claims 10 to 12 for controlling a system according to Claim 4, **characterized by** the step of: opening the second controllable valve (60) by transmitting a control signal from the control unit (8) to the second controllable valve (60) if and/or as soon as the self-regulating valve (6; 70) is in the open state.

14. Method according to one of the preceding Claims 10 to 13 for controlling a system according to Claim 4, **characterized by** the step of: closing the second controllable valve (60) by transmitting a control signal from the control unit (8) to the second controllable valve (60) if and/or as soon as the self-regulating valve (6; 70) is in the closed state or after expiry of a delay time following the captured closed state of the self-regulating valve (6; 70).

## Revendications

1. Système (2) pour l'élimination de fluide depuis un évier de cuisine (4), comprenant :
un évier de cuisine (4) pour un bloc-office de cabine de cuisine d'un aéronef, une vanne autorégulée (6 ; 70), une unité de commande (8), un capteur (10) et une première liaison de signal (12) entre le capteur (10) et l'unité de commande (8),
une entrée (14) de la vanne autorégulée (6 ; 70) étant reliée à une première conduite de fluide (16) qui est reliée au moins indirectement à une ouverture d'écoulement (18) de l'évier de cuisine (4),
la vanne autorégulée (6 ; 70) étant disposée au-dessous de l'ouverture d'écoulement (18) de l'évier de cuisine (4), de sortie que le fluide provenant de l'évier de cuisine (4) peut s'écouler à travers l'ouverture d'écoulement (18) associée dans la première conduite de fluide (16),
une sortie (20) de la vanne autorégulée (6 ; 70) étant configurée de manière à pouvoir être couplée au moins indirectement à une source de dépression (22) et
la vanne autorégulée (6 ; 70) étant configurée pour s'ouvrir automatiquement en présence d'une première quantité M1 prédéterminée de fluide dans la première conduite de fluide (16), de sorte que la vanne autorégulée (6 ; 70) se trouve dans un état d'ouverture et le fluide provenant de la première conduite de fluide (16) peut s'écouler à travers la vanne autorégulée (6), et pour se fermer automatiquement en présence d'une deuxième quantité M2 prédéterminée de fluide dans la première conduite de fluide (16), de sorte que la vanne autorégulée (6 ; 70) se trouve dans un état de fermeture et la deuxième quantité M2 prédéterminée de fluide demeure dans la première conduite de fluide (16) en tant que quantité résiduelle de fluide,
le capteur (10) étant configuré pour détecter l'état d'ouverture ou l'état de fermeture de la vanne autorégulée (6 ; 70),
le capteur (10) étant configuré pour la transmission à l'unité de commande (8) d'un signal de capteur qui représente l'état détecté de la vanne autorégulée (6 ; 70),
l'unité de commande (8) étant configuré pour délivrer au moins un signal de commande en se basant sur le signal de capteur transmis,
**caractérisé en ce que**
la vanne autorégulée (6 ; 70) présente un clapet anti-retour (79) qui possède un siège d'étanchéité (84) pouvant être fermé par une bille flottante (80) et qui est conçu pour empêcher un reflux d'un fluide de la sortie (20) vers l'entrée (14) de la vanne autorégulée (6 ; 70), le clapet anti-retour (79) étant disposé directement en amont de la sortie (20).

2. Système (2) selon la revendication précédente, **caractérisé par** une première vanne commandable (44) dont la sortie (48) est configurée de manière à pouvoir être couplée au moins indirectement à une source de dépression (22) pour l'aspiration du fluide, une liaison fluidique (42) entre une sortie (20) de la vanne autorégulée (6 ; 70) et une entrée (46) de la première vanne commandable (44) et une deuxième liaison de signal (56) entre l'unité de commande (8) et la première vanne commandable (44), l'unité de commande (8) étant configurée pour, au moyen d'une transmission d'un signal de commande à la première vanne commandable (44), fermer la première vanne commandable (44) lorsque et/ou dès que la vanne autorégulée (6 ; 70) se trouve dans l'état de fermeture.

3. Système (2) selon la revendication précédente, **caractérisé en ce que** l'unité de commande (8) est configurée pour, au moyen d'une transmission d'un signal de commande à la première vanne commandable (44), ouvrir la première vanne commandable (44) lorsque et/ou dès que la vanne autorégulée (6 ; 70) se trouve dans l'état d'ouverture.

4. Système (2) selon l'une des revendications précédentes, **caractérisé par** un élément de robinetterie d'arrivée d'eau (58) destiné à acheminer de l'eau dans l'évier de cuisine (4), une deuxième vanne commandable (60) qui est configurée pour commander un flux d'eau vers l'élément de robinetterie d'arrivée d'eau (58) et une troisième liaison de signal (64) entre l'unité de commande (8) et la deuxième vanne commandable (60), l'unité de commande (8) étant configurée pour, au moyen d'une transmission d'un signal de commande à la deuxième vanne commandable (60), ouvrir la deuxième vanne commandable (60) lorsque et/ou dès que la vanne autorégulée (6 ; 70) se trouve dans l'état d'ouverture.

5. Système (2) selon la revendication précédente, **caractérisé en ce que** l'unité de commande (8) est configurée pour, au moyen d'une transmission d'un signal de commande à la deuxième vanne commandable (60), fermer la deuxième vanne commandable (60) lorsque et/ou dès que la vanne autorégulée (6 ; 70) se trouve dans l'état de fermeture ou la fermer après écoulement d'un temps de retard à la suite de l'état de fermeture détecté de la vanne autorégulée (6).

6. Système (2) selon l'une des revendications précédentes 2 à 5, **caractérisé par** une unité de saisie (66), notamment une touche, et une liaison de signal (68) entre l'unité de saisie (66) et l'unité de commande (8), l'unité de commande (8) pouvant être commandée au moyen de l'unité de saisie (66) pour ouvrir ou fermer la première vanne commandable (44) et/ou pour ouvrir ou fermer la deuxième vanne commandable (60).

7. Système (2) selon l'une des revendications précédentes 2 à 6, **caractérisé en ce que** l'unité de commande (8) est configurée pour recevoir un signal d'instruction d'une unité de contrôle de niveau supérieur, l'unité de commande (8) pouvant être commandée sur la base du signal d'instruction pour ouvrir ou fermer la première vanne commandable (44) et/ou pour ouvrir ou fermer la deuxième vanne commandable (60).

8. Système (2) selon l'une des revendications précédentes, le clapet anti-retour possédant un dispositif de serrage qui peut être desserré sélectivement, lequel exerce une force de maintien supplémentaire sur la bille flottante en direction du siège d'étanchéité.

9. Véhicule comprenant un système (2) selon l'une des revendications précédentes.

10. Procédé pour commander un système (2) selon l'une des revendications 1 à 8, comprenant les étapes de :
- détection d'un état d'une vanne autorégulée (6 ; 70), et
- transmission du signal de capteur du capteur (10) à l'unité de commande (8), le signal de capteur représentant l'état détecté de la vanne autorégulée (6 ; 70) .

11. Procédé selon la revendication précédente pour commander un système selon la revendication 2, **caractérisé par** l'étape : de fermeture de la première vanne commandable (44) par transmission d'un signal de commande de l'unité de commande (8) à la première vanne commandable (44) lorsque et/ou dès que la vanne autorégulée (6 ; 70) se trouve dans l'état de fermeture.

12. Procédé selon l'une des revendications 10 et 11, **caractérisé par** l'étape : d'ouverture de la première vanne commandable (44) par transmission d'un signal de commande de l'unité de commande (8) à la première vanne commandable (44) lorsque et/ou dès que la vanne autorégulée (6 ; 70) se trouve dans l'état d'ouverture.

13. Procédé selon l'une des revendications précédentes 10 à 12 pour commander un système selon la revendication 4, **caractérisé par** l'étape : d'ouverture de la deuxième vanne commandable (60) par transmission d'un signal de commande de l'unité de commande (8) à la deuxième vanne commandable (60) lorsque et/ou dès que la vanne autorégulée (6 ; 70) se trouve dans l'état d'ouverture.

14. Procédé selon l'une des revendications précédentes 10 à 13 pour commander un système selon la revendication 4, **caractérisé par** l'étape : de fermeture de la deuxième vanne commandable (60) par transmission d'un signal de commande de l'unité de commande (8) à la deuxième vanne commandable (60) lorsque et/ou dès que la vanne autorégulée (6 ; 70) se trouve dans l'état de fermeture ou après écoulement d'un temps de retard à la suite de l'état de fermeture détecté de la vanne autorégulée (6 ; 70) .
